# EUROPÄISCHE PATENTSCHRIFT

(11) **EP 2 299 787 B1**
(45) Veröffentlichungstag und Bekanntmachung des Hinweises auf die Patenterteilung: **17.08.2016**
(21) Anmeldenummer: 10196374.2
(22) Anmeldetag: 24.01.2008
(51) Int. Cl.: H05B 41/00, H05B 41/28, H05B 41/282

(54) **DIGITALE STEUERSCHALTUNG EINES BETRIEBSGERÄTS FÜR LEUCHTMITTEL**
DIGITAL CONTROL CIRCUIT OF AN OPERATING DEVICE FOR LAMPS
CIRCUIT DE COMMANDE NUMÉRIQUE D'UN APPAREIL ÉLECTRIQUE POUR MOYEN D'ÉCLAIRAGE

(30) Priorität: 28.03.2007 DE 10714982; 30.03.2007 DE 10715508
(43) Veröffentlichungstag der Anmeldung: 23.03.2011
(62) Teilanmeldung aus: 08707261.7
(73) Patentinhaber: Tridonic GmbH & Co KG, 6851 Dornbirn (AT)
(72) Erfinder: Zudrell-Koch, Stefan, 6845, Hohenems (AT); Marent, Günter, 6780, Bartholomäberg (AT)
(74) Vertreter: Rupp, Christian

(56) Entgegenhaltungen:
- EP-A1- 0 871 348
- WO-A-95/28819
- US-A- 5 907 223

## Beschreibung

Die vorliegende Erfindung bezieht sich allgemein auf das Gebiet der Betriebsgeräte für Leuchtmittel. Typische Beispiele sind dabei elektronische Vorschaltgeräte zum Betrieb von Gasentladungslampen, Hochdrucklampen, Leuchtdioden etc. Allgemein ist es Aufgabe dieser Betriebsgeräte, das zugeordnete Leuchtmittel mit einer Versorgungsspannung mit angepasster Spannung und/oder Frequenz zu versorgen.

Die Erfindung bezieht sich insbesondere auf Betriebsgeräte mit Steuereinheiten, denen bspw. abhängig von der Konfiguration des Betriebsgeräts unterschiedliche Messignale zur Leistungsregelung der angeschlossenen Leuchtmittel zuführbar sind. Dies kann angewandt werden bei Betriebsgeräten für konstante Leistung ("Fixed Output") oder Betriebsgeräte, bei denen die Leistung der Leuchtmittel auf einen fest eingestellten oder von außen vorgebaren Wert ("Dimming") geregelt wird. Zum Zwecke dieser Leistungsregelung wird ein die Leistung direkt oder indirekt wiedergebender Parameter von einem die Leuchtmittel enthaltenden Lastkreis an eine Steuereinheit zurückgeführt. Die Steuereinheit vergleicht dann diesen Istwert mit einem Sollwert für die Leuchtmittelleistung. Ausgehend von diesem Vergleich stellt die Steuereinheit dann einen die Lampenleistung beeinflussenden Parameter ein, der ganz allgemein beispielsweise die Versorgungsspannung und insbesondere die Frequenz und/oder das Tastverhältnis der am Leuchtmittel anliegenden Spannung sein kann, wenn die Leistungskennlinie des Leuchtmittels frequenzabhängig ist. Die Leistung von Leuchtdioden kann beispielsweise bevorzugt mittels PWM-Ansteuerung erfolgen.

Es ist bereits bekannt, für einen derartigen Regelvorgang digitale integrierte Schaltungen beispielsweise in Form von ASICs oder Microcontrollern einzusetzen.

Es gibt aus dem Stand der Technik bekannte Leuchtmittel, bei denen die Leistungssteuerung über die Einstellung oder der Frequenz oder des Taktverhältnisses der Versorgungsspannung der Leuchtmittel erfolgt.

Ein Beispiel dafür ist die Versorgung von Leuchtmittel über eine Halbbrückenschaltung, die zwischen Masse und einer im wesentlichen konstanten Versorgungsspannung (Busspannung) geschaltet ist. Beispielsweise am Mittenpunkt von zwei Schaltern von der Halbbrückenspannung kann dann ein die Leuchtmittel enthaltener Lastkreis geschaltet werden.

Bei dieser Ausgestaltung gibt es wenigstens zwei Optionen zur Ermittlung Leuchtmittelleistung:
- Zum einen kann der Strom durch die Halbbrücke erfasst werden, wobei in diesem Fall die Leuchtmittelleistungs-Information im zeitlichen Mittelwert dieses Halbbrückenstromsignals "codiert" ist, oder
- Zum anderen kann der Strom durch die mit AC-Versorgungsspannung versorgten Leuchtmittel erfasst werden, wobei in diesem Fall die Leistungsinformation durch die Spitzenwerte des Stroms durch die Leuchtmittel "codiert" ist (der Mittelwert dieses Signals ist im wesentlichen null).

Aus der Druckschrift US 5,907,223 A ist ein AC-AC Betriebsgerät für eine Entladungslampe (z.B., eine Leuchtstofflampe) bekannt, das einen PFC Konverter mit einem Trenntransformator und einen DC-AC Wechselrichter umfasst, der auf der Sekundärseite des Trenntransformators bereitgestellt ist. Der Wechselstrom Eingang ist von der Lampe durch den Transformator im PFC Konverter isoliert und die Schaltfrequenz des PFC Konverters ist höher als die Lampenstromfrequenz (und die Schaltfirequenz des DC-AC Wechselrichters).Insgesamt stellt das System ein Zweifrequenz-Betriebsgerät dar, das einen isoliert PFC Konverter aufweist.

Aufgabe der vorliegenden Erfindung ist es nunmehr, eine Technik bereitzustellen, die es ermöglicht, Betriebsgerät im Sinne eines Plattform-Ansatzes derart auszulegen, dass es sich ohne externe Konfigurierung automatisch auf das jeweils aktuell anliegende Rückführsignal "einstellt".

Diese Aufgabe wird erfindungsgemäß durch die Merkmale der unabhängigen Ansprüche gelöst. Vorteilhafte Ausgestaltungen sind in den abhängigen Ansprüche niedergelegt.

Gemäß einem Beispiel ist also eine integrierte digitale Steuerschaltung für ein Betriebsgerät für Leuchtmittel vorgesehen. Die Steuerschaltung weist einen Ausgang zur Einstellung des Leuchtmittelbetriebs auf. Die Steuerschaltung weist einen Eingang für ein Signal auf, das die Leuchtmittelleistung wiedergibt. Dabei können an diesen Eingang je nach Konfiguration des Betriebsgeräts unterschiedliche Signaltypen angelegt werden, die bspw. ausgehend von unterschiedlichen Bereichen des Betriebsgeräts her stammen. Dabei ist die digitale integrierte Steuerschaltung derart ausgeführt, dass der Eingang intern mit wenigstens zwei unterschiedlichen Auswertungszweigen verbunden ist, deren Ausgänge wiederum zusammengeführt sind. Der Ausgang des Logikglieds wiederum ist mit einer Steuereinheit verbunden.

Jeder der mehreren parallelen Auswertungszweige führt also die Auswertung desselben Signals durch, allerdings anhand unterschiedlicher Sätze an Kriterien. Jedem Auswertungszweig ist also ein Kriteriensatz zugeordnet, der das Signal anhand eines oder mehrerer Kriterien analysiert.

Ein Aspekt der Erfindung bezieht sich auf eine Steuerschaltung nach Anspruch 1 für ein Betriebsgerät für Leuchtmittel,aufweisend einen Ausgang zur Ausgabe eines Steuersignals für den Leuchtmittelbetrieb auf, sowie einen Eingang für ein Signal,
wobei das Signal intern im Zeitmultiplex verarbeitet wird und dann dem Regelmodul als Istwertsignal zugeführt wird, wobei in den Zeitmultiplex-Abschnitten das Signal anhand unterschiedlicher Kriteriensätze ausgewertet wird, wobei das Regelmodul anhand dieses Istwertsignals und einem Sollwert einen Steuerwert ermittelt und an dem Ausgang der Steuerschaltung als Stellsignal ausgibt.

Vorzugsweise sind die Kriteriensätze dabei derart ausgewählt, dass pro potentiell anliegendem Signaltyp nur genau ein und nur ein Kriteriensatz erfüllt ist, so dass nur ein und genau ein Auswertungszweig somit einen Beitrag zu dieser Istsignal-Rückführung für die Leuchtmittelregelung liefert.

In einem nichtbeschränkenden Implementierungsbeispiel der Erfindung ist eine integrierte digitale Steuerschaltung für ein Betriebsgerät für Leuchtmittel vorgesehen. Die Steuerschaltung weist einen Ausgang zur Taktung von Schaltern einer Halbbrückenschaltung mit einstellbarer Frequenz und oder einstellbarem Tastverhältnis auf, wobei an die Halbbrückenschaltung ein die Leuchtmittel enthaltender Lastkreis anschließbar ist. Die Steuerschaltung weist einen Eingang für ein Signal auf, das eine Funktion der Leuchtmittelleistung wiedergibt. Dabei kann dieses Signal wahlweise ein Signal sein, das den Strom durch die Halbbrücke wiedergibt, oder ein Signal, das den Strom durch die Leuchtmittel wiedergibt. In diesem Beispiel sind liegt also in einer konkreten Implementierung eines dieser beiden Signale an. Dabei ist die digitale integrierte Steuerschaltung derart ausgeführt, dass der Eingang intern mit zwei Auswertungszweige verbunden ist, deren Ausgänge wiederum mit einem Logikglied zusammengeführt sind. Der Ausgang des Logikglieds wiederum ist mit einer Steuereinheit zur Einstellung der Frequenz des Halbbrücken-Ansteuersignals verbunden. Es erfolgt somit also eine Einstellung der Frequenz der Schalter der Halbbrücke abhängig von dem Ausgangswerts des Logikglieds.

Die beiden Auswertungszweige können insbesondere jeweils einen Komparator aufweisen. Den beiden Komparatoren der Auswertungszweige werden dabei unterschiedliche Referenzspannungen zugeführt. Die unterschiedlichen Referenzspannungen, mit denen das konkret anliegende Signal parallel verglichen wird, sind also ein Beispiel für unterschiedliche Kriterien, denen dasselbe Signal parallel unterworfen wird.

Das Logikglied kann beispielsweise ein ODER-Glied sein.

Die digitale integrierte Schaltung kann insbesondere als Microcontroller oder vorzugsweise als ASIC ausgeführt sein.

Der erste Auswertungszweig kann dabei derart ausgelegt sein, dass sein Ausgang zwei verschiedene Logikzustände einnehmen kann, wenn das Signal an dem Eingang den Halbbrückenstrom wiedergibt, wobei in diesem Fall dann der Ausgang des ersten Auswertungszweigs nur einen zeitlich konstanten Logikwert einnimmt, wenn ein den Strom durch die Leuchtmittel wiedergebendes Signal anliegt.

Das den Halbbrückenstrom wiedergebende Signal kann extern und/oder intern in der Steuerschaltung tiefpassgefiltert sein.

Der erste Auswertungszweig kann einen Komparator aufweisen, dessen Ausgang mit einer Tastverhältnis(Duty Cycle)-Auswerteeinheit verbunden ist. Das Tastverhältnis stellt somit ein weiteres Beispiel für ein Kriterium dar.

Der zweite Auswertungszweig kann insbesondere derart ausgelegt sein, dass sein Ausgang zwei verschiedene Logikzustände einnehmen kann, wenn das Signal anliegt, das den Strom durch die Leuchtmittel wiedergibt. Wenn dagegen das Signal an dem Eingang anliegt, das den Halbbrückenstrom wiedergibt, nimmt der zweite Auswertungszweig einen konstanten Logikwert ein.

Der zweite Auswertungszweig kann einen Komparator aufweisen, dessen Ausgang mit dem Logikglied verbunden ist.

Die Steuerschaltung kann dazu ausgebildet sein, abhängig von dem logischen Ausgangswert des Logik-Glieds die Frequenz des Halbbrücken-Ansteuersignals einzustellen, vorzugsweise zu erhöhen oder zu erniedrigen, besonders bevorzugt um ein Inkrement zu erhöhen oder zu erniedrigen.

Es kann sich somit also beispielsweise um einen Zweipunktregler handeln.

Die Erfindung bezieht sich auch auf Betriebsgeräte nach Anspruch 2 für Leuchtmittel, die eine derartige Steuerschaltung aufweisen. Beispiele sind elektronische Vorschaltgeräte für Gasentladungslampen, Hochdrucklampen oder Leuchtdioden.

Die Erfindung bezieht sich auch auf eine Leuchte, die Leuchtmittel und ein Betriebsgerät der genannten Art aufweist.

Die Erfindung bezieht sich schließlich auch auf Verfahren nach Anspruch 8 zur wahlweisen Regelung der Leistung von Leuchtmitteln abhängig von einem Halbbrückenstromsignal oder einen Leuchtmittelstromsignal.

Weitere Vorteile, Merkmale und Eigenschaften der Erfindung sollen nunmehr bezugnehmend auf die Figuren der begleitenden Zeichnungen erläutert werden.
- Fig. 1: zeigt eine schematische Ansicht einer digitalen integrierten Steuerschaltung (Controller), an die ein Lastkreis angeschlossen ist, der Leuchtmittel enthält,
- Fig. 2: zeigt Signalverläufe für den Fall, dass ein den Halbbrückenstrom wiedergebende Signal am Eingang des Controllers anliegt,
- Fig. 3: zeigt Signalverläufe für den Fall, dass ein Signal anliegt, das den Lampenstrom wiedergibt,
- Fig. 4: schließlich zeigt eine schematische Ansicht der Auswertezweige im Controller,
- Fig. 5: zeigt eine verallgemeinerte Darstellung der Erfindung, gemäss der ein Rückführsignal parallel unterschiedlichen Kriteriensätzen unterworfen wird, bevor es dem Regelalgorithmus als Istwert zugeführt wird,
- Figur 6: zeigt die Anwendung der Erfindung auf die Ansteuerung von Leuchtdioden (LEDs), wobei wiederum ein Rückführsignal unterschiedlichen Kriteriensätzen parallel unterzogen wird, bevor es dem Regelalgorithmus als Istwert zugeführt wird,
- Figur 7: zeigt eine Erläuterung der Signaldekodierung und Auswertung des Rückführsignals von Figur 7, und
- Figur 8: zeigt die Anwendung der vorliegenden Erfindung auf ein Rückführsignal einer PFC-Schaltung eines Betriebsgeräts für Leuchtmittel, wobei dieses Rückführsignal wiederum gemäß vorgegebenen Kriterien dekodiert und ausgewertet wird und parallele Auswertungszweige vorliegen.

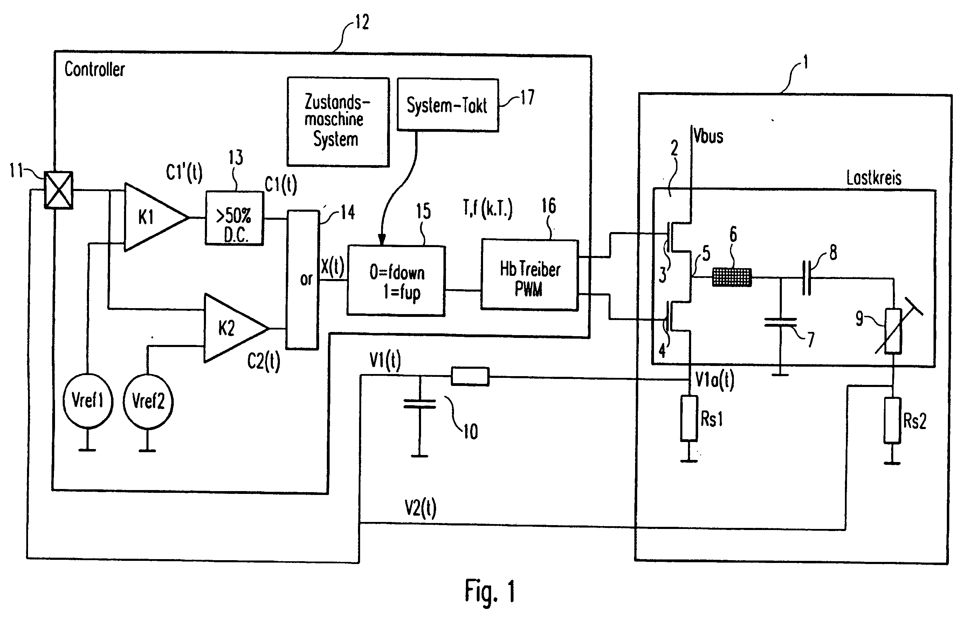

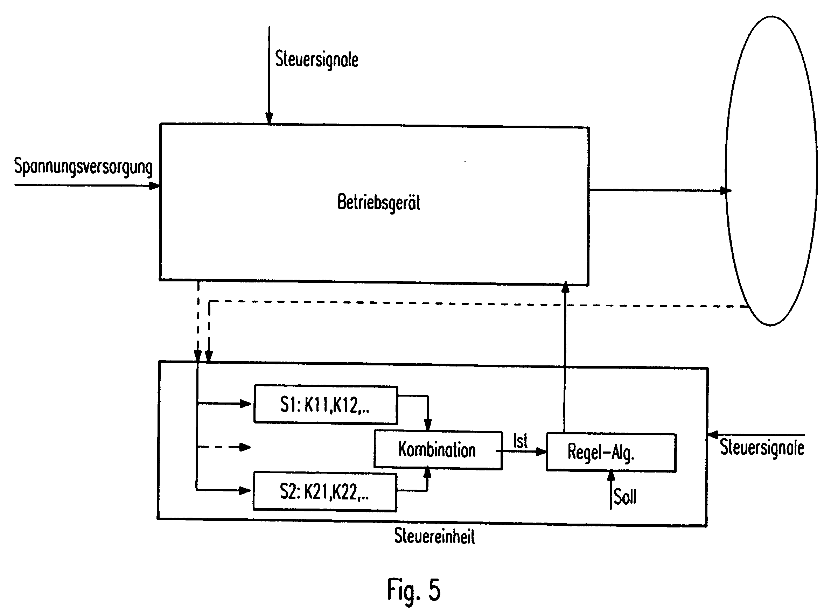

Die Erfindung soll nunmehr bezugnehmend auf Figur 5 erläutert werden, bevor beispielhafte Ausgestaltungen unter Bezugnahme auf die Figuren 1 bis 4 erläutert werden.

In Figur 5 ist allgemein ein mit Spannung versorgte Betriebsgerät gezeigt, das angeschlossene Leuchtmittel kontrolliert mit Leistung versorgt und selbst mit Spannung versorgt ist. Eine Steuereinheit ist separat herausgezeichnet, obwohl sie natürlich üblicherweise in das Betriebsgerät integriert ist. Die Steuereinheit erhält an wenigstens einem Eingang ein Messsignal von dem Betriebsgerät und/oder den Leuchtmittel zugeführt. Die Steuereinheit weist ein Regelmodul auf, d.h. ein Modul, das ausgehend von einem zugeführten Istwertsignal und einem Sollwert einen Steuerwert anhand eines Regelalgorithmus ermittelt und diesen Steuerwert an das Betriebsgerät ausgibt, so dass dieses entsprechend den Betrieb der Leuchtmittel ausführt.

Dem Betriebsgerät und insbesondere der Steuereinheit können ggf. auch externe Signale, bspw. zur Sollwerteinstellung zugeführt werden.

Gemäss der Erfindung liegt in dem Betriebsgerät und insbesondere in der Steuereinheit keine A-priori-Information vor, die angibt welcher Signaltyp tatsächlich an dem Istwerteingang anliegt. Die Steuereinheit ist erfindungsgemäss dazu ausgebildet auch ohne vorherige Konfiguration den Signaltyp selbstständig zu ermitteln. Erfindungsgemäss ist zur Signaltypermittlung auch keine "Identifizierungs-Präambel" in dem Signal notwendig, sondern die Signalinformation selbst wird neben der eigentlichen Istwert-Auswertung auch zur "Decodierung" des Signaltyps verwendet.

Dazu ist bspw. wie in Figur 5 dargestellt vorgesehen, das das Messsignal wenigstens zwei parallelen Auswertungszweigen zugeführt wird. Jeder Auswertungszweig verfügt über einen Satz S1, S2 unterschiedlicher Kriterien K11, K12 bzw. K21, K22. Das Signal wird also somit parallel unterschiedlichen Kriteriensätzen unterworfen.

Alternativ oder zusätzlich kann das Signal intern seriell verarbeitet werden und bspw. im Zeitmultiplex verarbeitet und dann dem Regelmodul als Istwertsignal zugeführt werden, wobei in den Zeitmultiplex-Abschnitten das Signal anhand unterschiedlicher Kriteriensätze ausgewertet wird.

Kriterien können bspw. sein:
- Amplitude,
- Tastverhältnis in einer definierten Periode,
- Frequenzanteile, etc.

Vorab wird festgelegt, welche Signaltypen für eine derartige Steuereinheit-Plattform zulässig sind. Die Signaltypen unterscheiden sich bspw. in der Art ihres Abgriffs in dem Betriebsgerät oder an den Leuchtmitteln. Für jeden zulässigen Signaltyp wird ein Auswertungszweig bereitgestellt, der mit einem für diesen Signaltyp eindeutigen Kriteriensatz versehen wird. Jeder Kriteriensatz weist ein oder vorzugsweise mehrere Kriterien auf. Die Anzahl der Kriterien kann sich von Auswertungszweig zu Auswertungszweig unterscheiden oder gleich sein.

Jeder Kriteriensatz ist für einen Signaltyp eindeutig in dem Sinne, dass bei Anliegen dieses Signaltyps nur ein Auswertungszweig einen (sich zeitlich verändernden) Beitrag als Istwertsignal liefert, während vorzugsweise alle anderen Auswertungszweige keinen bzw. einen zeitlich konstanten Beitrag liefern.

Bei Änderung des am Eingang anliegenden Signaltyps stellt sich somit die Regelung instantan und ohne Umkonfigurierung um, indem dann automatisch ein anderer Auswertungszweig den für die Regelung massgeblichen zeitlich verändernden Beitrag liefert.

In Fig. 1 ist schematisch mit dem Bezugszeichen 1 ein Lastkreis bezeichnet. Diesem Lastkreis 1 wird eine im wesentlichen konstante (optional auf einen Sollwert geregelte) Zwischenkreisspannung (Busspannung) V_{bus} zugeführt, wobei diese Busspannung eine DC-Spannung ist. Genauer gesagt wird diese Busspannung einer Halbbrückenschaltung zugeführt, die schematisch mit dem Bezugszeichen 2 bezeichnet ist und die zwei wechselseitig getaktete Schalter 3, 4 aufweist. Vorzugsweise sind diese Schalter 3, 4 MOSFETs.

An dem Mittenpunkt 5 der Halbbrückenschaltung 2 ist der eigentliche Lastkreis angekoppelt, wobei der Lastkreis eine Serienresonanzschaltung bestehend aus einer Drossel 6 und einem Kondensator 7 sowie einem Koppelkondensator 8 aufweist.

Parallel zu dem Resonanzkondensator 7 sind Leuchtmittel 9 angeschlossen, die beispielsweise eine Gasentladungslampe, eine oder mehrere Hochdrucklampen oder Leuchtdioden sein können. Wie in der Figur 1 schematisch dargestellt können diese Leuchtmittel insbesondere eine frequenzabhängige Kennlinie aufweisen. Daher kann die Frequenz der Versorgungsspannung für die Leuchtmittel 9, die die Halbbrückenschaltung ausgehend von der DC-Busspannung erzeugt, zur Einstellung der Leistung der Leuchtmittel 9 dienen.

Wenn die Leuchtmittel nicht diese frequenzabhängige Kennlinie aufweisen, wie es bspw. bei LEDs der Fall ist, kann die Leistungssteuerung auch über Einstellung des Tastverhältnisses erfolgen (PWM-Modulation).

In Figur 1 sind zwei Möglichkeiten dargestellt, wie nunmehr die Leistung der Leuchtmittel 9 indirekt oder direkt erfasst werden kann. Es wird dazu ein Parameter zurückgeführt, der direkt oder indirekt die Leuchtmittelleistung wiedergibt.

Die erste Möglichkeit ist der Abgriff eines Signals V1a(t) an einem Messwiderstand (Shunt) RS1, der vorzugsweise zwischen dem potentialniedrigeren Schalter 4 der Halbbrückenschaltung 2 und Masse geschaltet ist. Dieses Signal gibt indirekt die Leistung der Leuchtmittel 9 wieder, da ja die Busspannung im wesentlichen konstant ist. Die Leistungsinformation dieses Signals V1a(t) liegt in seinem zeitlichen Mittelwert, so dass eine interne oder externe (bezüglich des Controllers) Tiefpassschaltung 10 vorgesehen ist, wobei das tiefpassgefilterte Halbbrückenstromsignal mit V1(t) bezeichnet wird.

Eine alternative Erfassung der Leistung der Leuchtmittel 9 liegt in der Erfassung des Stroms durch die Leuchtmittel 9 mittels eines Messwiderstands (Shunt) Rs2, der bevorzugt zwischen der potentialenniedrigeren Seite Leuchtmittel 9 und Masse geschaltet ist.

Dieses Signal wird im folgenden V2(t) bezeichnet.

Im tatsächlichen Regelungsbetrieb wird natürlich nur eines der beiden Signale V1(t) oder V2(t) als Istwert für die Lampenleistung verwendet.

Der Controller soll aber nunmehr in der Lage sein, ohne externe Konfiguration (Anlegen von externen Konfigurierungswiderständen, Ablegen eines Werts in einem nichtvolatilen Speicher etc.) automatisch die korrekte Regelung der Leuchtmittelleistung durchzuführen, unabhängig welches der beiden Signale V1(t) oder V2(t) demselben Eingang 11 des Controllers 12 zugeführt wird.

Da der Controller 12 vorzugsweise als ASIC oder Microcontroller ausgeführt ist, allgemein also als integrierte digitale Steuerschaltung, kann derselbe Controller 12 als Plattform in unterschiedlichen Geräten Verwendung finden, d.h. insbesondere Geräten, die eine beliebige der beiden oben angeführten Ist-Signalrückführungen hat.

Im tatsächlichen Gerät kann entweder nur einer der beiden Rückführzweige von V1(t) oder V2(t) hardwaremäßig vorgesehen sein. Alternativ können beide hardwaremäßig vorgesehen sein, wobei indessen eine der Zweige inaktiv geschaltet ist, beispielsweise durch Unterbrechung durch Herausnahme eines Ohmschen Widerstands.

Der Controller 12 ist nunmehr also erfindungsgemäß derart ausgestaltet, dass er unabhängig von der Art des tatsächlich zurückgeführten Istwertsignals zu dem Eingang 11 des Controllers 12 automatisch die richtige Leistungseinstellung für die Leuchtmittel 9 möglichst nahe an einen Sollwert ausführt, indem er entsprechend die Frequenz und/oder das Tastverhältnis der Schalter der Halbbrücke einstellt. Dabei ist wie gesagt zu berücksichtigen, dass diese beiden Signalarten die Leistungsinformation unterschiedlich codiert haben, nämlich einerseits in zeitlichem Mittelwert im Falle des Halbbrückenstroms und andererseits in Form des Spitzenwertbereichs im Fall des Leuchtmittelstroms.

Wie in Figur 1 ersichtlich sind erfindungsgemäß in dem Controller 12 zwei Auswertezweige mit dem Eingang 11 verbunden.

Der erste Auswertungszweig, der für die korrekte Auswertung des intern oder extern tiefpassgefilterten Halbbrückenstromsignals V1(t) zuständig ist, weist einen Komparator K1 sowie eine Tastverhältnisauswerteschaltung 13 auf. Dem Komparator K1 wird dabei einerseits das dem Eingang 11 des Controllers 12 zugeführte Signal zugeführt, das wie gesagt wahlweise das Signal V1(t) oder V2(t) sein kann. Weiterhin wird ihm eine Referenzspannung V_{ref1} zugeführt.

Die Tastverhältnis-Auswerteeinheit 13 gibt ein Logiksignal (beispielsweise 0 oder 1) aus, dessen Wert davon abhängt, ob das Tastverhältnis des Ausgangssignals des Komparators K1 größer oder kleiner als 50% ist.

Der zweite Auswertezweig weist einen Komparator K2 auf, dem wiederum das an den Eingang 11 anliegende Eingangssignal des Controllers 12 sowie eine Referenzspannung V_{ref2} zugeführt werden. Vorzugsweise ist die Referenzspannung des zweiten Komparators K2 unterschiedlich zu der Referenzspannung V_{ref1} des ersten Komparators K1.

Die Ausgangssignale der beiden Auswertezweige sind über ein Logik-Glied verbunden, das beispielsweise ein ODER-Glied 14 sein kann. In der Ausführungsform von Figur 1 wird also einerseits das logische Ausgangssignal der Tastverhältnis-Auswerteeinheit 13 einerseits und andererseits das Ausgangssignal des Komparators K2 dem Logik-Glied 14 zugeführt.

Das zeitabhängige Ausgangssignal des Logik-Glieds 14 wird nunmehr mit X(t) bezeichnet und wird einer Einheit 15 zugeführt, die den Logik-Ausgangswert des Logikglieds 14 in eine Frequenzvorgabe und/ Tastverhältnisvorgabe für einen Halbbrückentreiber 16 umsetzt, der wiederum die Schalter 3, 4 der Halbbrücke 2 ansteuert.

Vorzugsweise gibt die Frequenzumsetzereinheit 15 die Information "Erhöhe Frequenz" bei einem ersten Logikzustand des Signals X(t) aus, während in dem jeweils anderen logischen Zustand des Signals X(t) das Signal "Erniedrige die Frequenz der Halbbrücke" an den Halbbrückentreiber 16 ausgegeben wird. Vorzugsweise ist diese Information für die Halbbrückentreiber die Ansteuerung einer inkrementellen Erhöhung oder Erniedrigung der Halbbrücken-Betriebsfrequenz.

Beispielsweise kann somit diese Frequenzumsetzereinheit 15 als Zähler ausgeführt sein. Dieser Zähler integriert während einer Schaltperiode des Halbbrückentreibers 16 das anliegende Eingangssignal X(t), so dass der Zählerwert also bei einem anliegenden Eingangssignal "1" laufend inkrementell erhöht wird ("laufend" bedeutet dabei mit der Frequenz des Systemtakts 17), während bei einem anliegenden Signal "logisch null" der Zählerstand erniedrigt wird. Jeweils nach einer Periode des Halbbrückentreibers 16 wird dann der Zähler neu initialisiert. Abhängig davon ist am Ende einer Periode des Halbbrückentreibers festzustellen, ob der Wert des Zählers über oder unter dem Initialwert (der nicht null sein muss) liegt.

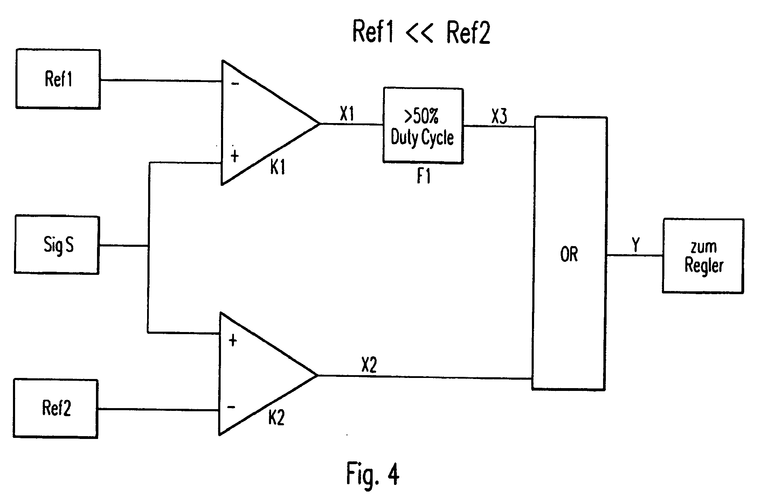

Figur 4 zeigt detailliert die Verschaltung der Komparatoren K1, K2 sowie die Anordnung des ersten und zweiten Auswertungszweigs. Es sei noch einmal betont, dass die invertierten Eingänge der Komparatoren K1, K2 anliegenden Referenzspannungen vorzugsweise unter V_{ref1}, V_{ref2} vorzugsweise unterschiedlich sind und vorzugsweise V_{ref2} größer ist als V_{ref1}.

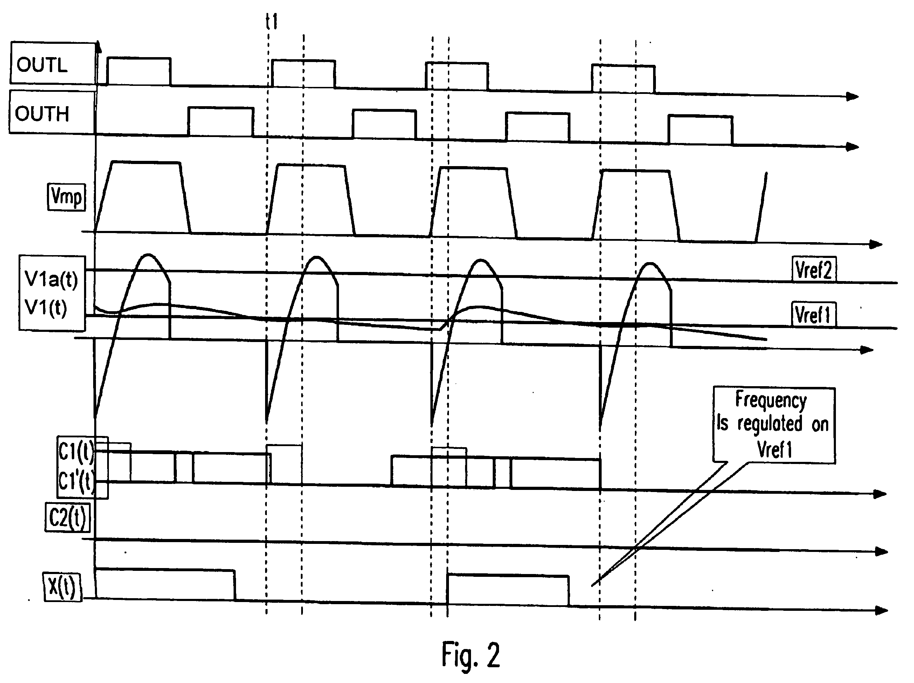

Bezugnehmend auf Figur 2 soll nunmehr das Szenario erläutert werden, das am Eingang 11 des Controllers 12 das Signal V1(t) anliegt, d.h. ein Halbbrückenstromsignal.

Die Signale OutH und OutL bezeichnen die Gate-Ansteuersignale des potentialhöheren (OutH) Schalters 3 bzw. des potentialniedrigeren (OutL) Schalters 4. Nach dem wechselseitigen Einschalten des Schalters 3 und dann des Schalters 4 ist eine Periode des Schaltvorgangs der Halbbrücke 2 beendet, was schematisch mit dem Zeitpunkt t1 bezeichnet ist. V_{MP} bezeichnet die Mittenpunktspannung, d.h. die Spannung am Mittenpunkt 5, an der der Lastkreis angeschlossen ist.

Weiterhin ist in Figur 2 ersichtlich, dass die Referenzspannung Vref2 über der von V_{ref1}. liegt.

Das intern oder extern gefilterte Mittelwertsignal V1(t) kann durch entsprechende Wahl der Vergleichsspannungen V_{ref1}. bzw. Vref2 zwar, abhängig von der aktuellen Leuchtmittelleistung, den Schwellenwert V_{ref1}.
unterschreiten oder überschreiten. Dagegen wird es stets unterhalb der Referenzschwelle Vref2 des zweiten Komparators K2 sein. Dementsprechend ist der Ausgang des Komparators K2, d.h. das Signal C2(t) stets null. Dieses Signal ändert sich also für den Fall der Erfassung des Halbbrückenstroms V1(t) über die gesamte Betriebszeitdauer nicht.

Dagegen ist die Referenzspannung Vref1. so gewählt, dass bei eingeschaltetem Schalter 4 (siehe Signal OutL) das Signal V1a(t) über dem Schwellenwert Vref1. liegt, während es bei eingeschaltetem Schalter 3 (Signal OutH) darunterliegt. Aufgrund des Anschaltens der Ansteuerung des Schalters 3, 4 mit einem Tastverhältnis von 50% wird somit das Signal V1(t) etwa 50% der Schaltperiode t1 über dem Schwellwert Vref1. und entsprechend 50% darunterliegen.

Wenn indessen die Lampenleistung über dem durch die Referenzspannung Vref1. liegenden Sollwert liegt, wird das Tastverhältnis des Signals V1(t) über 50% liegen, was bedeutet, dass dann der Ausgang der Tastverhältnis-Auswerteeinheit 13 auf logisch Hoch geht, wodurch auch der Ausgang des ODER-Glieds auf Hoch (oder 1) geht. Dementsprechend wird dann der Halbbrückentreiber zu einer inkrementellen Erhöhung der Betriebsfrequenz der Halbbrücke 2 angesteuert. Aufgrund des Betriebs der Leuchtmittel im kapazitiven Bereich bedeutet dies einen Betriebspunkt der Leuchtmittel weiter weg vom Resonanzpeak, was eine Leistungserniedrigung bewirkt.

Wenn dagegen im zeitlichen Mittel, gemessen über eine Schaltperiode T1, das Signal V1(t) mehr als 50% unter der Referenzspannung Vref1. liegt, wird die Frequenz der Halbbrücke erniedrigt, wodurch sich die Leistung der Leuchtmittel 9 bei Betrieb auf dem kapazitiven Ast der Resonanzkurve erhöht.

Nochmals sei betont, dass die Referenzspannung Vref1. den Leistungssollwert für die Leuchtmittel 9 bei Erfassung des Halbbrückenstroms vorgibt. Dementsprechend gibt die Spannung Vref2 den Leistungssollwert bei Erfassung (Rückführung als Istwert) des Lampenstroms vor.

Die Spannungen Vref1. oder Vref2 können fest ("fixed output") vorgegeben sein. Sie können aber auch beispielsweise von außen im Sinne von Dimmsignalen einstellbar sein, wodurch sich ein Dimmbetrieb ergibt.

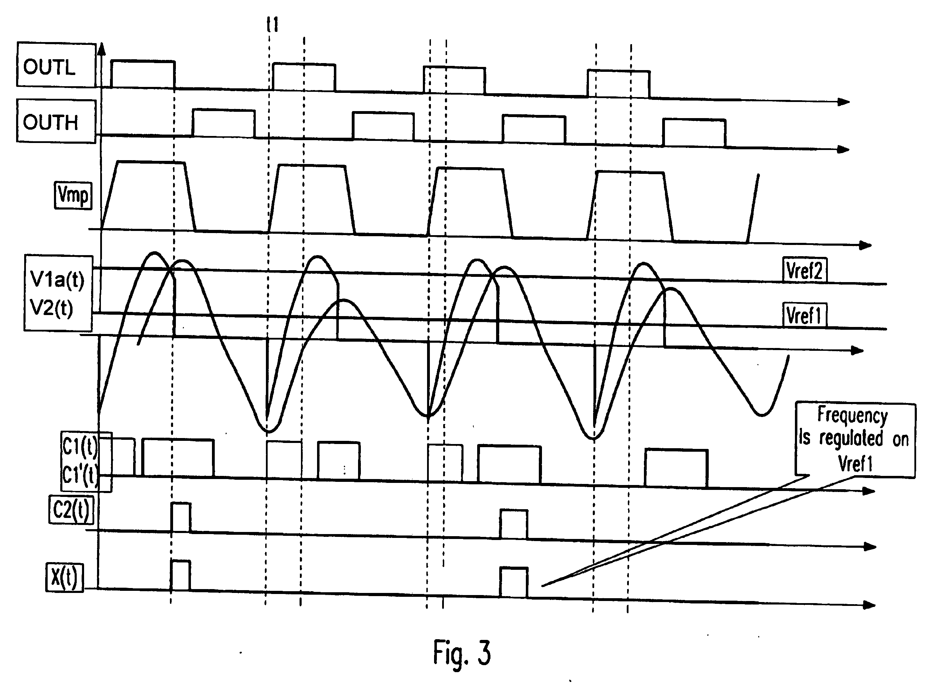

Wie in Fig. 3 ersichtlich wird bei Rückführung eines Lampenstromsignals (das zeitlich nicht gemittelt oder tiefpassgefiltert ist) das Tastverhältnis des Vergleichs dieses Rückführsignals mit der Referenzspannung Vref1. immer unter 50% sein, so dass in diesem Fall die Tastwert-Auswerteeinheit 13 konstant ein Signal C1(t) = 0 ausgibt. Somit trägt dieser erste Auswertezweig bei der Erfassung des Leuchtmittelstroms keinen Beitrag zur Regelung bei, während im Fall der Erfassung des Halbbrückenstroms der zweite Auswertezweig keinen Beitrag liefert.

Die Erhöhung bzw. Erniedrigung der Betriebsfrequenz der Halbbrücke 2 hängt nunmehr allein davon ab, wie lange der Scheitelbereich des Stromsignals durch die Leuchtmittel über den Schwellenwert Vref2 liegt.

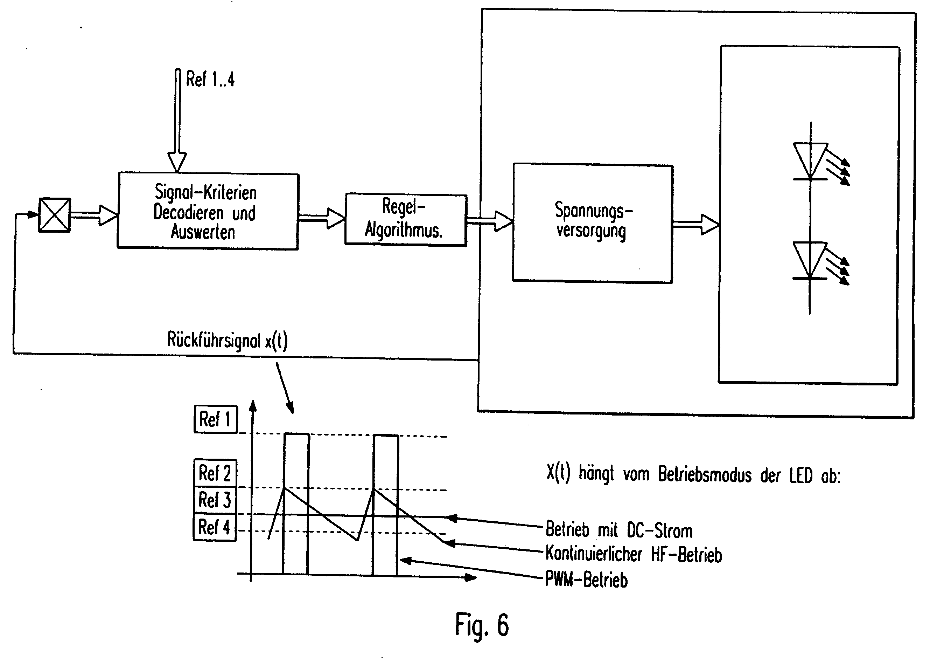

Bezug nehmend auf Figur 6 soll nunmehr eine Anwendung der Erfindung auf die geregelte Versorgung von Leuchtdioden (LEDs) mit Spannung und/oder Strom erläutert werden.

Aus dem Lastkreis, der die Leuchtdioden umfasst, wird wiederum an einem Eingang der Steuerschaltung ein Rückführsignal angelegt. Das Rückführsignal wird wiederum gemäß vorgegebener Signalkriterien, hier Schwellenwerte (Referenzwerte (Ref1, Ref2, Ref3, Ref4)) 'dekodiert' und ausgewertet, bevor es als Istwertsignal einem Regelmodul zugeführt wird, das einen Regelalgorithmus implementiert. Abhängig von dem zugeführten Istwertsignal und einem Sollwert gibt das Regelmodul dann ein Steuersignal an eine schematisch dargestellte Spannungs-/Stromversorgungseinheit für die Leuchtdioden aus.

Der Plattformgedanke bei dieser Anwendung liegt nunmehr darin, dass die Steuereinheit für unterschiedliche Betriebsmodi der LEDs verwendbar sein soll, ohne dass der Steuereinheit apriori-Information über die konkret implementierte Betriebsweise für die LEDs zugeführt wird.

Die vorliegenden Betriebsmodi für die LEDs können beispielsweise vorgesehen sein:
- Betrieb mit DC-Strom
- Kontinuierlicher HF-Betrieb
- PWM-Betrieb.

Wie in Figur 6 schematisch dargestellt, wird das Rückführsignal x(t), das beispielsweise den Diodenstrom wiedergeben kann, einen unterschiedlichen Verlauf abhängig davon einnehmen, welche der drei oben geschilderten zulässigen Betriebsarten für die LEDs tatsächlich implementiert ist.

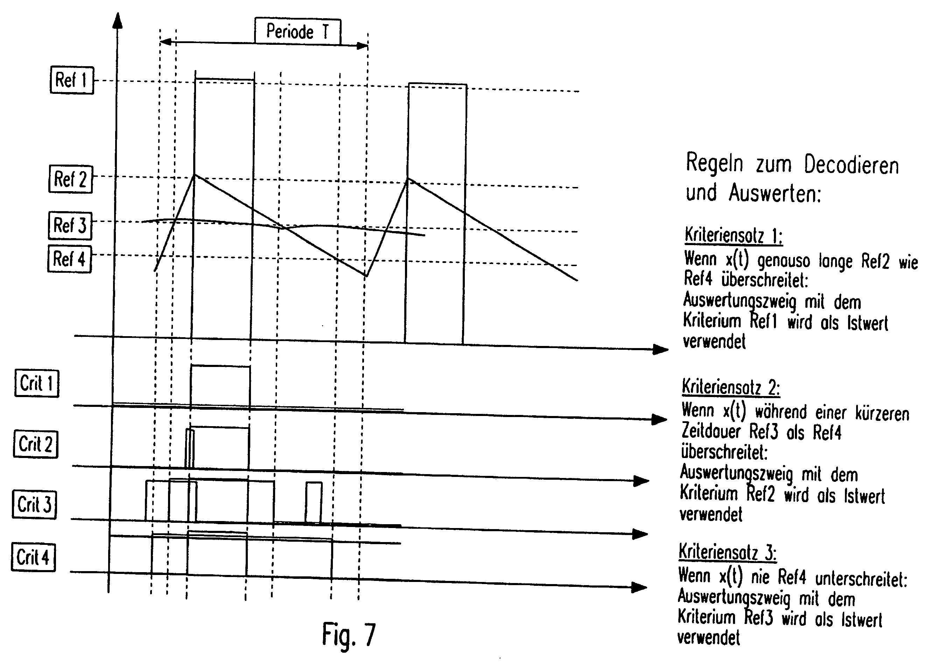

Die Auswertungskriterien in diesem Beispiel, siehe auch Figur 7, sind durch die unterschiedlichen Schwellenwerte (Referenzwerte (Ref1-Ref4)) definiert. Genauer gesagt, siehe Figur 7, wird ausgewertet, ob bzw. wie lange das Rückführsignal x(t) bestimmte Schwellenwerte über- bzw. unterschreitet. Diese Auswertung wird jeweils innerhalb einer Periode T der Schaltansteuerung eines Schalters in der Spannungs-/Stromversorgungseinheit für die Leuchtdioden ausgeführt.

In Figur 7 sind drei verschiedene Auswertungskriteriensätze vorgegeben, was also drei parallelen Auswertungszweigen entspricht.

Wenn x(t) genau so lange den Schwellenwert Ref2 wie den Schwellenwert R4 überschreitet, wird darauf geschlossen, dass ein PWM-Betrieb am Ausgang des Regelmoduls angeschlossen ist und dementsprechend wird der Schwellenwert Ref1 angewandt, d.h. es wird ein Auswertungszweig als Istwertsignalrückführung verwendet, indem das Rückführsignal x(t), immer auf eine Schalterperiode T bezogen, mit dem Schwellenwert Ref 1 verglichen wird.

Wenn das Rückführsignal x(t) den Schwellenwert Ref3 während einer kürzeren Zeitdauer als den Schwellenwert Ref4 überschreitet, wird darauf geschlossen, dass ein kontinuierlicher HF-Betrieb der Leuchtdioden implementiert ist. In diesem Fall wird der Auswertungszweig zur Istwertsignalrückführung verwendet, der das Rückführsignal x(t) mit dem Schwellenwert Ref2 vergleicht.

Ein dritter Kriteriensatz überprüft, ob das Rückführsignal x(t) in der Schalterperiode T nie den Schwellenwert Ref4 unterschreitet. Falls dies der Fall ist, wird auf das Vorliegen eines Betriebs der LEDs mit DC-Strom geschlossen. In diesem Fall wird ein Auswertungszweig zur Istwertsignalrückführung verwendet, der das Rückführsignal x(t) mit dem Schwellenwert Ref3 vergleicht.

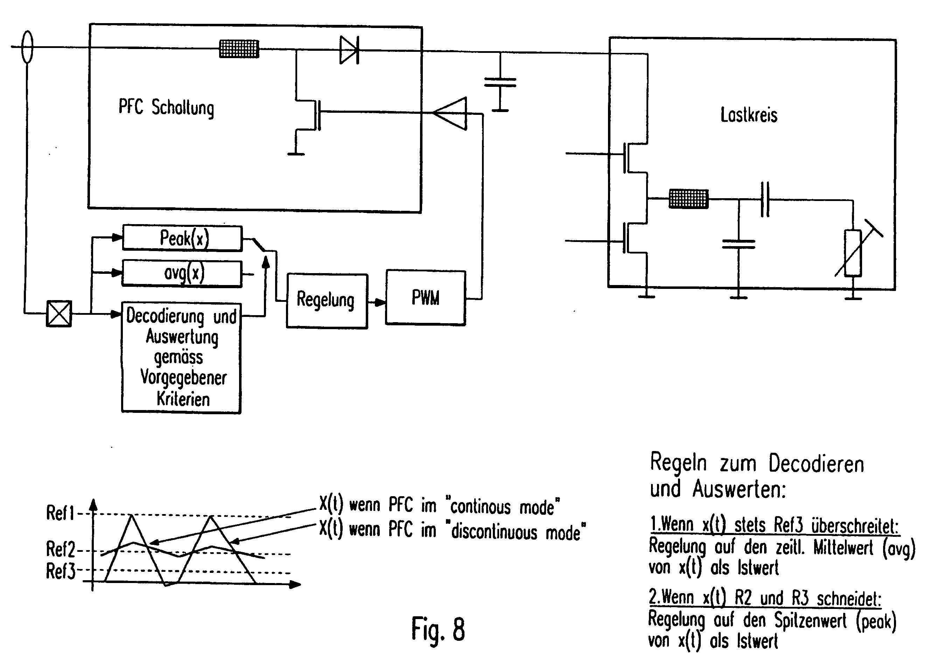

Bezug nehmend auf Figur 8 soll nunmehr erläutert werden, dass die vorliegende Erfindung nicht nur auf die Lastkreisregelung, sondern auch auf Rückführsignale in anderen Bereichen eines Betriebsgeräts für Leuchtmittel zur Anwendung kommen kann. Im in Figur 8 dargestellten Beispiel ist das Rückführsignal ein Stromsignal einer PFC-Schaltung, die mit Gleichspannung versorgt ist und einen in Serie geschaltete Induktivität und eine Diode aufweist, wobei abhängig von einer Ansteuerung eines Schalters die Induktivität aufmagnetisiert bzw. entmagnetisiert wird. Ausgangsseitig ist ein Speicherkondensator vorgesehen. Mit der durch den Speicherkondensator stabilisierten DC-Spannung kann dann wie dargestellt ein Lastkreis versorgt werden, der beispielsweise eine Halbbrückenschaltung aufweisen kann, dessen Mittenpunkt ein Serienresonanzkreis mit den Leuchtmitteln angeschlossen sein kann, wobei die Leuchtmittel schematisch als variabler Widerstand dargestellt sind.

Im Sinne eines Plattform-Gedankens soll die Steuer- und/oder Regeleinheit gemäß der Erfindung nunmehr für unterschiedliche Betriebsarten der PFC-Schaltung verwendbar sein, und zwar wiederum, ohne dass der Steuerschaltung vorab eine Konfigurierungsinformation bezüglich der konkreten Betriebsweise der PFC-Schaltung zugeführt wird.

Die beiden grundsätzlich möglichen Betriebsweisen der PFC-Schaltung sind in diesem Beispiel:
'Continuous mode' des PFC, d.h., der Schalter wird wieder eingeschaltet, bevor die Spule völlig entmagnetisiert ist, so dass der Strom durch die Spule nie auf Null abfällt.
'Discontinuous mode' des PFC, d.h., es wird abgewartet, bis der Spulenstrom auf Null und ggf. sogar leicht darunter auf einen Minimalwert abgesunken ist, bevor der Schalter wieder eingeschaltet wird. Der sogenannte 'borderline mode' kann unter diesen 'discontinuous mode' insofern subsummiert werden, als beim 'borderline mode' unmittelbar bei Erreichen der Nulllinie durch den Spulenstrom der Schalter wieder eingeschaltet wird.

Die Steuerschaltung gemäß der vorliegenden Erfindung ist nunmehr in der Lage, anhand des Rückführsignals (hier: Strom durch die Spule der PFC-Schaltung) zu ermitteln, welche Betriebsweise der PFC-Schaltung tatsächlich anliegt.

Dazu wird einerseits ermittelt, ob das Rückführsignal x(t) stets einen Schwellenwert Ref3 überschreitet:
In diesem Fall wird auf das Vorliegen des 'continuous mode' geschlossen und es wird der zeitliche Mittelwert des Rückführsignals x(t) dem Regelungsmodul als Istwert zugeführt.

Wenn dagegen das Rückführsignal x(t) zeitweise sowohl die Schwellenwerte Ref2 und Ref3 über- bzw. unterschreitet, wird auf das Vorliegen eines Betriebs der PFC-Schaltung im 'discontinuous mode' geschlossen, in welchem Fall der Spitzenwert (peak) des Rückführsignals x(t) dem Regelungsmodul als Istwert zugeführt wird.

## Patentansprüche

1. Steuerschaltung (12) für ein Betriebsgerät für Leuchtmittel (9), bspw. ASIC und/oder Mikrocontroller,
aufweisend einen Ausgang zur Ausgabe eines Steuersignals für den Leuchtmittelbetrieb, sowie einen Eingang (11) für ein Messsignal,
wobei das Messsignal intern im Zeitmultiplex verarbeitet wird und dann einem in der Steuerschaltung integrierten Regelmodul (14, 15) als Istwertsignal zugeführt wird,
wobei in den Zeitmultiplex-Abschnitten das Messsignal anhand unterschiedlicher Kriteriensätze (S1, S2) ausgewertet wird,
wobei das Regelmodul (14, 15) anhand dieses Istwertsignals und eines Sollwerts einen Steuerwert ermittelt und an dem Ausgang der Steuerschaltung (12) als Stellsignal ausgibt, und wobei das Messsignal einen Strom (V1(t)) durch einen Wechselrichter des Betriebsgeräts wiedergibt, einen Strom (V2(t)) durch das Leuchtmittel (9) wiedergibt, oder ein Rückführsignal aus einem Lastkreis ist der Leuchtdioden umfasst,
wobei das Rückführsignal den Diodenstrom wiedergibt.

2. Steuerschaltung nach Anspruch 1,
wobei die Kriterien ausgewählt sind aus:
- Amplitude,
- Tastverhältnis in einer definierten Periode,
- Frequenzanteile, und/oder
- Zeitdauer des Unterschreitens/Überschreitens wenigstens eines Schwellenwerts.

3. Steuerschaltung nach Anspruch 1 oder 2,
wobei die Kriteriensätze (S1, S2) dabei derart ausgewählt sind, dass für jeden zulässigen Signaltyp für den Eingang nur ein Kriteriensatz (S1, S2) erfüllt ist, so dass nur ein Auswertungszweig einen zeitlich verändernden Beitrag zu dem Istwertsignal für das Regelmodul liefert, während die anderen Auswertungszweige keinen oder einen zeitlich konstanten Beitrag liefern.

4. Steuerschaltung nach einem der vorhergehenden Ansprüche,
bei dem das Steuersignal zur Ein/Aus-Ansteuerung eines Schalters (3, 4) des Betriebsgeräts ausgelegt ist, insbesondere zur Ansteuerung eines Schalters eines PFCs, eines Schaltreglers oder eines Wechselrichters des Betriebsgeräts ausgelegt ist.

5. Steuerschaltung nach einem der vorliegenden Ansprüche,
wobei in der Steuerschaltung keine a-priori-Information über den am Eingang anliegenden Signaltyp vorliegt.

6. Steuerschaltung nach einem der vorhergehenden Ansprüche,
die dazu ausgelegt ist, den anliegenden Signaltyp adaptiv und instantan zu ermitteln.

7. Betriebsgerät für Leuchtmittel,
insbesondere elektronisches Vorschaltgerät für Gasentladungslampen, Hochdrucklampen oder Leuchtdioden,
aufweisend eine Steuerschaltung nach einem der vorhergehenden Ansprüche.

8. Verfahren zur wahlweisen Regelung der Leistung von Leuchtmitteln (9) mittels einer integrierten digitalen Steuerschaltung, die aufweist einen Ausgang zur Ausgabe eines Steuersignals für den Leuchtmittelbetrieb sowie einen Eingang (11) für ein Messsignal,
wobei das Messsignal intern im Zeitmultiplex verarbeitet wird und dann einem Regelmodul als Istwertsignal zugeführt wird,
wobei in dem Zeitmultiplex-Abschnitten das Messsignal anhand unterschiedlicher Kriteriensätze (S1, S2) ausgewertet wird,
wobei das Regelmodul anhand dieses Istwert-Signals und einem Sollwert einen Steuerwert ermittelt und an dem Ausgang der Steuerschaltung als Stellsignal ausgibt, und wobei das Messsignal einen Strom (V1(t)) durch einen Wechselrichter des Betriebsgeräts wiedergibt, einen Strom (V2(t)) durch ein Leuchtmittel wiedergibt, oder ein Rückführsignal aus einem Lastkreis ist,
wobei das Rückführsignal einen Diodenstrom wiedergibt.

## Claims

1. Control circuit (12) for an operating device for light-emitting means (9), for example, an ASIC and/or a microcontroller,
comprising an output to provide a control signal for the light-emitting means operation, and an input (11) for a measurement signal,
wherein the measurement signal is processed internally in the time multiplex and is then fed as an actual value signal to a control module (14, 15) integrated in the control circuit,
wherein the measurement signal is evaluated in the time multiplex sections as a function of different sets of criteria (S1, S2),
wherein the control module (14, 15) determines a control value as a function of this actual value signal and a reference value, and outputs a control signal at the output of the control circuit (12), and wherein the measurement signal represents a current (V1(t)) through an inverter of the operating device, or represents a current (V2(t)) through the light-emitting means (9), or is a feedback signal from a load circuit, which comprises light emitting diodes, wherein the feedback signal represents the diode current.

2. Control circuit according to claim 1,
wherein the criteria are selected from:
- amplitude,
- duty cycle in a defined period,
- frequency components, and/or
- duration of the undershooting/overshooting at least of a threshold.

3. Control circuit according to claim 1 or 2,
wherein the sets of criteria (S1, S2) are so selected that only one set of criteria (S1, S2) is satisfied for each allowable signal type for the input, so that only one evaluation branch provides a time-varying contribution to the actual value signal for the control module, while the other evaluation branches provide no, or a temporally constant, contribution.

4. Control circuit according to one of the preceding claims,
wherein the control signal is designed for on/off control of a switch (3, 4) of the operating device, in particular for driving a switch of a PFC, of a switching regulator, or of an inverter of the operating device.

5. Control circuit according to one of the preceding claims,
wherein the control circuit has no *a priori* information about the signal type applied to the input.

6. Control circuit according to one of the preceding claims,
wherein it is designed to determine the applied signal type adaptively and instantaneously.

7. Operating device for light-emitting means,
in particular electronic control gear for gas discharge lamps, high-pressure lamps or light emitting diodes, comprising a control circuit according to any one of the preceding claims.

8. Method for selectively controlling the power of light-emitting means (9) by means of an integrated digital control circuit comprising
an output to output a control signal for the light-emitting means operation, as well as an input (11) for a measurement signal,
wherein the measurement signal is processed internally in the time multiplex, and is then supplied to a control module as a feedback signal,
wherein, in the time multiplex sections, the measurement signal is evaluated as a function of various sets of criteria (S1, S2),
wherein the control module uses this actual value signal and a reference value to determine a control value, and outputs it as a control signal at the output of the control circuit, and wherein the measurement signal represents a current (V1(t)) through an inverter of the operating device, or represents a current (V2(t)) through a light-emitting means, or is a feedback signal from a load circuit, wherein the feedback signal represents a diode current.

## Revendications

1. Circuit de commande (12) pour un appareil d'actionnement pour moyens d'éclairage (9), par exemple ASIC ou micro-contrôleur,
comprenant une sortie pour l'envoi d'un signal de commande pour l'exploitation du moyens d'éclairage, ainsi qu'une entrée (11) pour un signal de mesure,
le signal de mesure étant traité en interne par multiplexage dans le temps puis introduit dans un module de régulation (14, 15), intégré dans le circuit de commande, en tant que signal de valeur effective,
dans les portions de multiplexage dans le temps, le signal de mesure étant analysé à l'aide de différents ensembles de critères (S1, S2),
le module de régulation (14, 15) déterminant, à l'aide de ce signal de valeur effective et d'une valeur de consigne, une valeur de commande et l'envoyant, à la sortie du circuit de commande (12), en tant que signal de réglage et le signal de mesure reproduisant un courant (V1(t)) à travers un onduleur de l'appareil d'actionnement, un courant (V2(t)) à travers le moyens d'éclairage (9) ou un signal de retour provenant d'un circuit de charge comprenant des diodes électroluminescentes, le signal de retour reproduisant le courant de diode.

2. Circuit de commande selon la revendication 1,
les critères étant sélectionnés parmi :
- amplitude
- rapport cyclique dans une période définie,
- composante de fréquence et/ou
- durée du passage en dessous / du dépassement d'au moins une valeur seuil.

3. Circuit de commande selon la revendication 1 ou 2,
les ensembles de critères (S1, S2) étant sélectionnés de façon à ce que, pour chaque type de signal autorisé pour l'entrée, seul un ensemble de critères (S1, S2) soit satisfait, de façon à ce que seul un embranchement d'analyse apporte une contribution variable dans le temps au signal de valeur effective pour le module de régulation, tandis que les autres embranchements d'analyse n'apportent aucune contribution ou une contribution constante dans le temps.

4. Circuit de commande selon l'une des revendications précédentes,
dans lequel le signal de commande est conçu pour la commande marche/arrêt d'un interrupteur (3, 4) de l'appareil d'actionnement, plus particulièrement pour la commande d'un interrupteur d'un PFC, d'un régulateur de commutation ou d'un onduleur de l'appareil d'actionnement.

5. Circuit de commande selon l'une des revendications précédentes,
dans le circuit de commande, aucune information a-priori n'existant à propos du type de signal à l'entrée.

6. Circuit de commande selon l'une des revendications précédentes,
qui est conçu pour détermine le type de signal de manière adaptative et instantanée.

7. Appareil d'actionnement pour moyens d'éclairages,
plus particulièrement appareil de ballast électronique pour lampes à décharge de gaz, lampes haute pression ou diode électroluminescentes, comprenant un circuit de commande selon l'une des revendications précédentes.

8. Procédé pour la régulation sélective de la puissance de moyens d'éclairages (9) au moyen d'un circuit de commande numérique intégré, qui comprend une sortie pour l'envoi d'un signal de commande pour l'exploitation du moyens d'éclairage ainsi qu'une entrée (11) pour un signal de mesure,
le signal de mesure étant traité en interne par multiplexage dans le temps puis étant introduit dans un module de régulation en tant que signal de valeur effective,
dans les portions de multiplexage dans le temps, le signal de mesure étant analysé à l'aide de différents ensembles de critères (S1, S2),
le module de régulation déterminant, à l'aide de ce signal de valeur effective et d'une valeur de consigne, une valeur de commande et l'envoyant, à la sortie du circuit de commande, en tant que signal de réglage et le signal de mesure reproduisant un courant (V1(t)) à travers un onduleur de l'appareil d'actionnement, un courant (V2(t)) à travers le moyens d'éclairage (9) ou un signal de retour provenant d'un circuit de charge, le signal de retour reproduisant le courant de diode.
